# EUROPEAN PATENT APPLICATION

(11) **EP 2 103 858 A1**
(43) Date of publication of application: **23.09.2009**
(21) Application number: 08007181.4
(22) Date of filing: 11.04.2008
(51) Int. Cl.: F16L 33/04

(54) **Biorientable hose clamp construction**

(30) Priority: 28.02.2008 IT MI20080326
(71) Applicant: Merlett Tecnoplastic S.p.A., 21020 Daverio VA (IT)
(72) Inventor: Tamborini, Ariberto, 21020 Daverio Varese (IT)
(74) Representative: Cicogna, Franco

(57) **Abstract**

A biorientable hose clamp (1) comprises an annular element (2) which can be closed by an orientable clamping device (3) adapted to provide the annular element with either a rightward or leftward arrangement, to fit the annular element (2) to the pitch of a corrugated tube the biorientable hose clamp construction (1) is applied to.

## Description

### BACKGROUND OF THE INVENTION

The present invention relates to a biorientable hose clamp construction.

Prior delivery or suction tubes or hoses, conventionally made of a plastics material, are usually provided with a spiral or coil reinforcement construction, designed for enhancing their strength and squashing and flexure resistance.

The above mentioned reinforcement coil structures generally project from the tube article and may be made either of a plastic or a metal material.

Moreover, depending on the tube product type and maker thereof, said coil reinforcement structures may have either a rightward or a leftward coil pitch.

The above tubes or hoses are coupled, in use, to other elements such as metal tubes, suction hoods, ducts of different types, and so on, by using clamping elements.

In particular, are usually used metal wire clamps, which must be fitted to the shape, and mainly to the pitch, either rightward or leftward, of the tube being used.

This characteristic compels the clamp makers to make two different hose clamp arrangements, that is having either a rightward or leftward helix, and an installer should necessarily buy a clamp suitable for the provided assembling.

This contributes to increasing the making and storing costs while further increasing the difficulties related to a proper installation of the hose clamps.

### SUMMARY OF THE INVENTION

Accordingly, the aim of the present invention is to provide such a biorientable hose clamp which is so designed as to perfectly and indifferently fit a rightward or a leftward inclination of a corrugated tube or hose it is coupled to.

Within the scope of the above mentioned aim, a main object of the invention is to provide such a hose clamp construction, which can be sold in a small size clamp package.

Another object of the invention is to provide such a hose clamp construction, which can be installed in a very simple and quick manner.

Yet another object of the present invention is to provide such a hose clamp construction which, owing to its specifically designed features, is very reliable and safe in operation.

Yet another object of the present invention is to provide such a hose clamp construction which can be easily made and which, moreover, is very competitive from a mere economic standpoint.

According to one aspect of the present invention, the above mentioned aim and objects, as well as yet other objects, which will become more apparent hereinafter, are achieved by a biorientable hose clamp construction, **characterized in that** said biorientable hose clamp construction comprises an annular element to be closed by an orientable fixing device designed for providing said annular element with either a rightward or a leftward arrangement, to fit said annular element to the pitch of a corrugated hose or tube the clamp construction is applied to.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

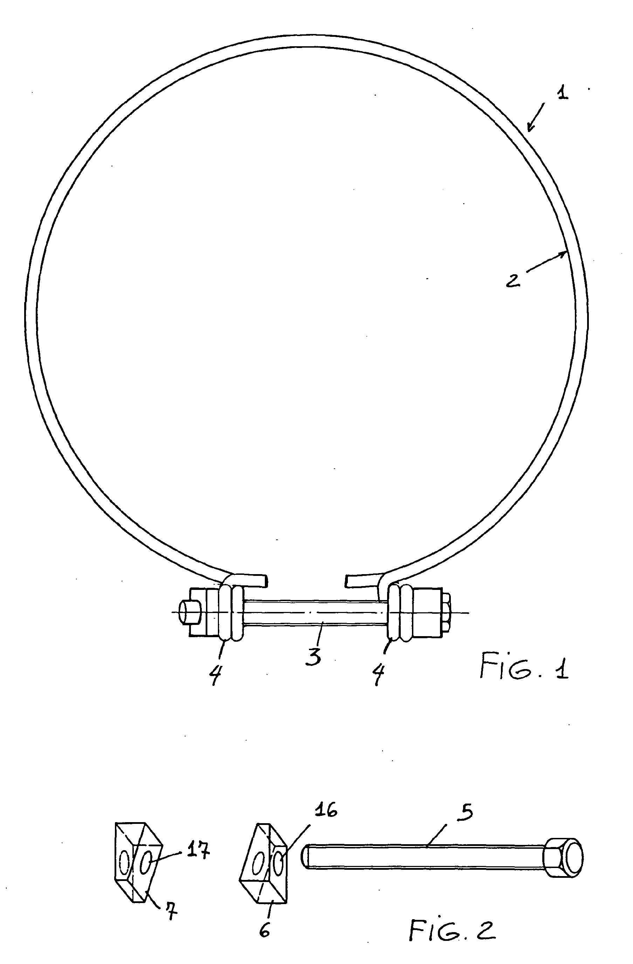

Figure 1 is a front elevation view of a biorientable hose clamp construction according to the present invention;
Figure 2 is an exploded perspective view of the screw fixing device for fixing the biorientable clamp construction according to the present invention;

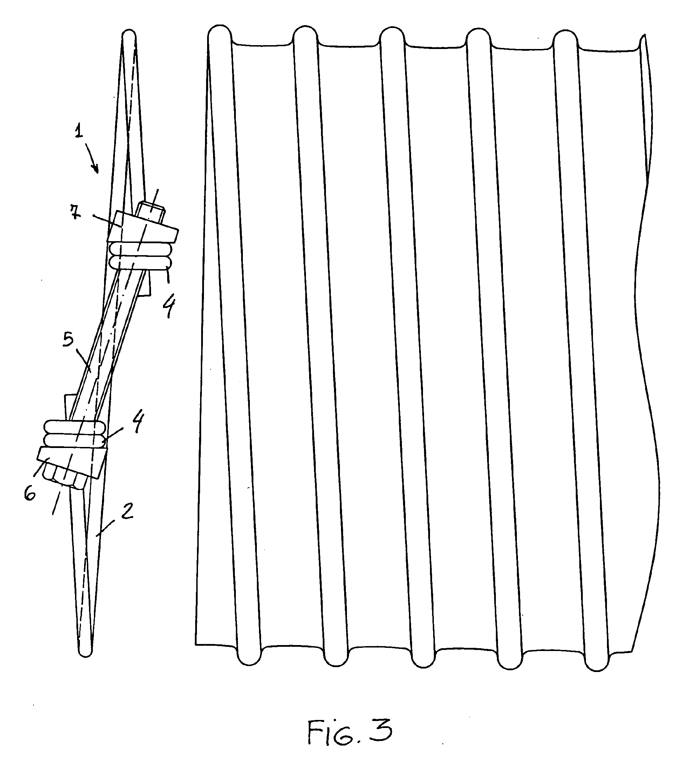

Figure 3 is a side elevation view of the clamp and a corrugated tube or hose length;
Figure 4 is a side elevation view showing the application of the biorientable hose clamp construction to a corrugated tube or hose having a rightward pitch;
Figure 5 is a further side elevation view, showing the application of the biorientable hose clamp construction to a corrugated tube having a leftward pitch; and

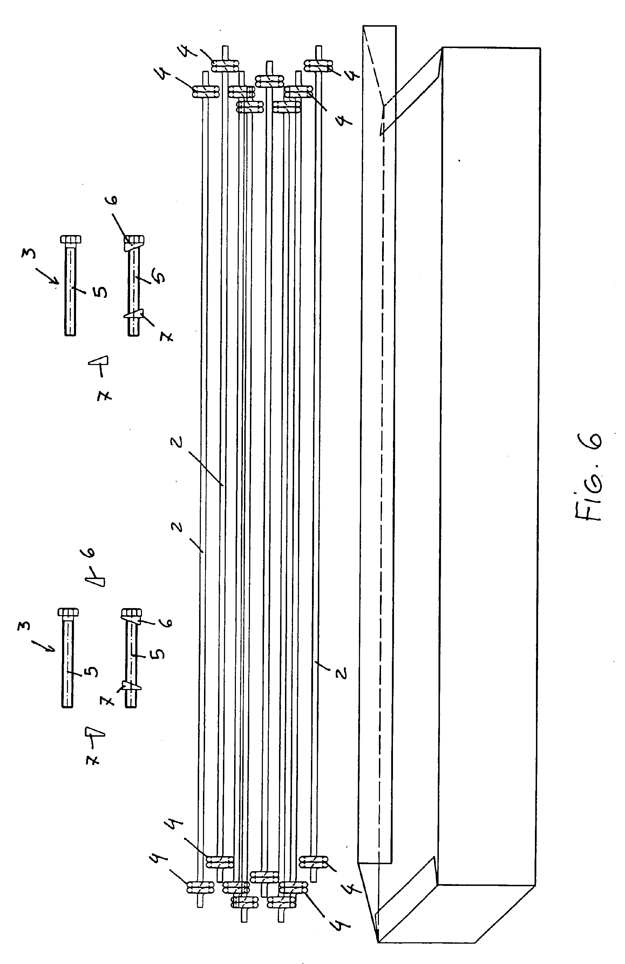

Figure 6 is a perspective view showing the contents of a box element constituting a commercial package for the biorientable hose clamp construction according to the present invention.

### DESCRIPTION OF THE PREFERRED EMBODIMENT

With reference to the number references of the above mentioned figures, the biorientable hose clamp construction according to the present invention, which has been generally indicated by the reference number 1, substantially comprises an annular element 2 to be closed by an orientable fixing device 3.

In particular, said annular element 2 can comprise a linear soft steel wire, adapted to be easily bent, and having a suitable diameter and being cut to a set length.

Said wire 2 has two end portions ending with respective ring elements 4 perpendicular to the wire axis and directly formed on said wire by any suitable bending-twisting method.

The orientable fixing device 3 comprises a screw 5, a first plug 6, having a throughgoing hole 16 and a slanted wall, and a second plug 7 having a threaded hole 17 and a corresponding slanted wall.

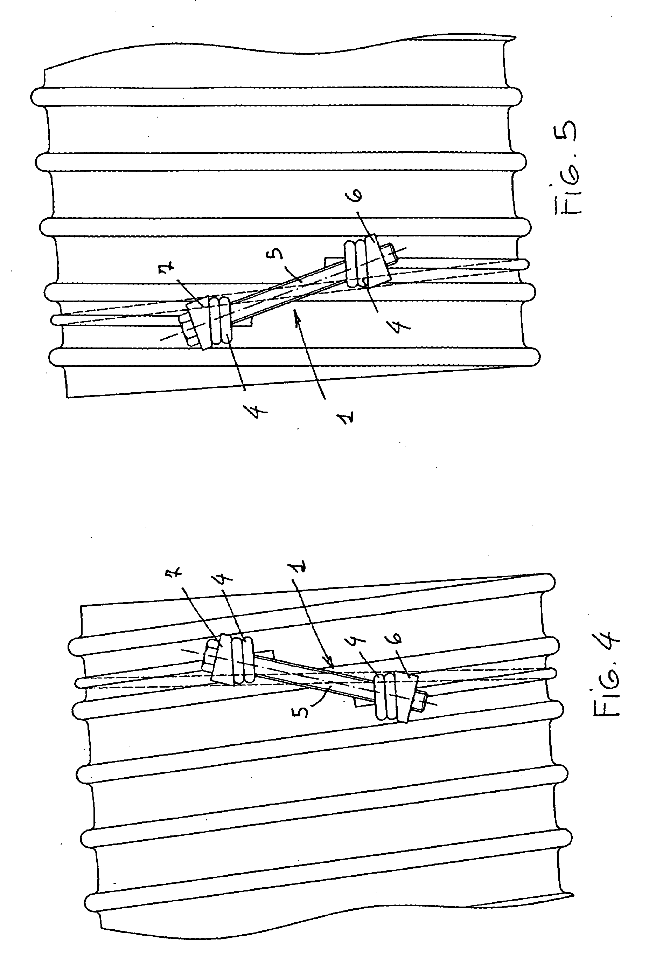

By suitably orienting the slanted walls of the two plugs, which, during the clamping operation, will press on the ring elements 4 of the metal wire 2, the clamp construction will be automatically oriented either rightward or leftward, as is clearly shown in figures 4 and 5.

For facilitating the assembling operation, the sides of said plugs can be suitably marked by "1" and "r" marks (that is indicating either a leftward or a rightward direction), thereby providing a user with an immediate indication for easily orienting said plugs to provide either a rightward or a leftward clamp.

The annular element 2 can comprise a metal wire, as shown in the illustrated example, or any other elongated element, such as an elongated reed or blade, and so on.

It has been found that the invention fully achieves the intended aim and objects.

In fact, the invention provides a biorientable hose clamp construction, which can be indifferently used for fixing either rightward or leftward pitched hoses or tubes.

Another important advantage of the biorientable hose clamp construction according to the present invention is that it has a very reduced space requirement, since the clamp may be sold in a kit package, in a distended condition, and being wound on the tube or hose, directly by the user in the assembling operation.

The two slanted-wall plugs, in particular, can be easily and quickly oriented depending on the rightward or leftward arrangement of the tube or hose.

In practicing the invention, the used materials, as well as the contingent size and shapes, can be any, depending to requirements.

## Claims

1. A biorientable hose clamp construction, **characterized in that** said orientable hose clamp construction comprises an annular element to be closed by an orientable fixing device adapted to provide said annular element with either a rightward or leftward arrangement, to fit said annular element to a pitch of a corrugated tube said clamp construction is applied to.

2. A biorientable hose clamp construction, according to claim 1, **characterized in that** said orientable fixing device comprises a screw, a first plug, having a throughgoing hole and a slanted wall, and a second plug, having a threaded hole and a slanted wall, thereby, by orienting the slanted walls of said plugs, which, upon clamping the clamp will press on the end portions of said annular element, said clamp will be automatically provided with either a rightward or a leftward arrangement or orientation.

3. A biorientable hose clamp construction, according to claim 1 or 2, **characterized in that** said annular element comprises a linear soft steel wire, adapted to be easily bent, having a set diameter and cut to a set length.

4. A biorientable hose clamp construction, according to one or more of the preceding claims, **characterized in that** said wire has two end portions ending with respective ring elements perpendicular to an axis of said wire and directly formed from said wire by a bending-twisting process.

5. A biorientable hose clamp construction, according to one or more of the preceding claims, **characterized in that,** to facilitate the assembling, the plugs have plug sides marked by "1" and "r" marks, thereby providing a user with an immediate indication for properly orienting said plugs to provide either a rightward or a leftward clamp.

6. A biorientable hose clamp construction, according to one or more of the preceding claims, **characterized in that** said annular element comprise a metal wire, a blade element, or the like.
